Europäisches Patentamt

European Patent Office

Office européen des brevets

(19)

(11) **EP 1 052 401 B1**

(12) **EUROPEAN PATENT SPECIFICATION**

(45) Date of publication and mention
of the grant of the patent:
**24.09.2003 Bulletin 2003/39**

(51) Int Cl.⁷: **F02N 11/08**, B60K 6/04,
B60K 41/00

(21) Application number: **00109808.6**

(22) Date of filing: **09.05.2000**

(54) **Automotive vehicle with automatic stop-restart system of internal combustion engine**

Kraftfahrzeug mit automatischer Stop-Startanlage des Verbrennungsmotors

Véhicule comportant un dispositif d'arrêt et de redémarrage automatique du moteur à combustion interne

(84) Designated Contracting States:
**DE FR GB**

(30) Priority: **14.05.1999 JP 13389599**

(43) Date of publication of application:
**15.11.2000 Bulletin 2000/46**

(73) Proprietor: **NISSAN MOTOR COMPANY, LIMITED**
**Yokohama-shi, Kanagawa 221-0023 (JP)**

(72) Inventors:
• **Yoshino, Takahiro**
**Yokosuka-shi, Kanagawa 239-0082 (JP)**

• **Nakajima, Yuki**
**Yokohama-shi, Kanagawa 236-0057 (JP)**

(74) Representative: **Weber, Joachim, Dr.**
**Hoefer & Partner**
**Patentanwälte**
**Gabriel-Max-Strasse 29**
**81545 München (DE)**

(56) References cited:
**EP-A- 0 903 492      US-A- 5 614 809**
**US-A- 6 018 694**

EP 1 052 401 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

## BACKGROUND OF THE INVENTION

Field of the Invention

The present invention relates to an automotive vehicle having a system capable of automatically stopping and restarting an internal combustion engine, and particularly to an automotive vehicle with an automatic stop-restart system of an internal combustion engine in which the engine is automatically stopped when the vehicle is in its stopped state, and automatically restarted from the vehicle stand-still state.

Description of the Prior Art

In recent years, there have been proposed and developed various automatic stop-restart systems. One such automatic stop-restart system has been disclosed in Japanese Patent Provisional Publication No. 8-291725.

## SUMMARY OF THE INVENTION

On vehicles with a motor generator capable of rotating in synchronization with rotation of the engine crankshaft of an internal combustion engine, it is possible to automatically stop the engine when the vehicle is in a stopped state and automatically restart the engine during a start-up period of the vehicle. In this case, the motor generator serves as an automatic starter for the engine. During an automatic engine restart operating mode, the engine can be cranked by a motoring torque produced by the motor generator. During early stages of the automatic engine restart operating mode, that is, just after the engine is cranked by the motoring operation of the motor generator, there is less development of a negative pressure (boost) in the intake pipe of the induction system, and thus a quantity of intake air drawn into engine cylinders is large. Under these conditions, assuming that a fuel-injection operation is initiated and spark plug firing is re-executed, there is a possibility of undesiredly high engine torque. To avoid such a high engine torque (which will be hereinafter referred to as an "initial combustion torque") and effectively regenerate energy, the operating mode of the motor generator can be switched from the power-running mode to the regenerative mode. On automotive vehicles having a motor generator (functioning as an automatic engine starter), during the first few moments of the motoring operation of the motor generator, in order to crank the engine, the motor generator is operated by way of a torque control according to which a motor torque of the motor generator is set to or adjusted toward a predetermined rated torque. Then, as soon as the engine speed reaches a predetermined rotational speed, in lieu of the torque control a rotational speed feedback control for the motor generator is initiated so that the engine speed is brought closer to a desired rotational speed such as a predetermined idle speed. However, in setting a feedback gain for the previously-noted rotational speed feedback control, there are the following problems. A low feedback gain may result in a low response for the rotational speed feedback control. It is impossible to quickly switch from the power-running mode to the regenerative mode, due to such a low feedback gain, and thus to adequately regenerate the initial combustion torque as a regenerative torque to be absorbed by the motor generator. That is, there is a possibility of power-train shock. Additionally, during several cycles of the restarting period, generally, the combustion stability of the engine is low. Combustion states for every cycles tend to fluctuate, owing to misfiring or the like. The previously-noted low feedback gain means a low follow-up performance. Thus, the low feedback gain is unsuitable to effectively absorb positive and negative combustion torque fluctuations occurring just after initiation of the automatic engine-restart operating mode. Owing to such a low feedback gain, there is a possibility of fluctuations of idling speed and a delay in accelerating force required at a timing of depression of the accelerator pedal. To avoid this, it is possible to set the feedback gain to a high gain. However, owing to the high feedback gain (high response), there is a possibility that the motor torque of the motor generator fluctuates remarkably due to small rotational-speed fluctuations of the engine even during idle speed after shifting to the stable combustion state. Assuming that a belt drive or a chain drive is used in a power train, undesired noise and vibrations may occur. Due to such a high feedback gain, recharging and discharging of the battery may be repeated for a brief moment. This promotes battery deterioration, thus resulting in a reduced battery life.

The European Patent EP 0 903 492 discloses a known motor generator arrangement.

Accordingly, it is an object of the invention to provide an automotive vehicle with an automatic stop-restart system of an internal combustion engine, which avoids the aforementioned disadvantages.

It is another object of the invention to provide an automotive vehicle with an automatic stop-restart system of an internal combustion engine, which is capable of reconciling a feedback-control response required during the first few moments after initiation of the automatic engine-restart operating mode and a feedback-control response required after a transition to the stable combustion state of the engine, during the motor-generator rotational speed feedback control made to the motor generator when the engine is automatically restarted.

In order to accomplish the aforementioned and other objects of the present invention, an automotive vehicle with an automatic stop-restart system of an internal combustion engine comprises a sensor sensing a rotational speed of the engine, a motor generator coupled to an engine for rotation synchronously with the engine, and cranking the engine in response to a command needed to initiate a cranking cycle by a motoring operation of the motor generator, and subjected to a rotational speed feedback control after the rotational speed of the engine reaches a predetermined speed, and capable of operating in a power-running mode to automatically restart the engine by the motoring torque and operating in a regenerative mode for energy regeneration, and a controller capable of executing an automatic engine-stop mode at which the engine is automatically stopped by fuel cutoff, and generating the command for an automatic engine-restart operating mode at which the engine is cranked by the motoring operation and then started up by initiating timely a fuel-injection operation after initiation of the rotational speed feedback control, the controller comprising a combustion-stability decision section which determines whether the engine is in a stable combustion state, and a feedback gain switching section which switch a feedback gain for the rotational speed feedback control between at least two feedback gains, depending upon a combustion state of the engine determined by the combustion-stability decision section.

## BRIEF DESCRIPTION OF THE DRAWINGS

Fig. 1 is a system schematic of an embodiment of automotive vehicle with an automatic stop-restart system.
Figs. 2A - 2C are timing charts obtained during the automatic engine-restart operating mode.
Fig. 3 is a flow chart showing a feedback gain setting routine executed during the rotational speed feedback control for the motor generator.
Fig. 4 is a lookup table showing the relationship between an intake-air quantity TP (engine load) and a complete-explosion criterion TQFCMP.

## DESCRIPTION OF THE PREFERRED EMBODIMENTS

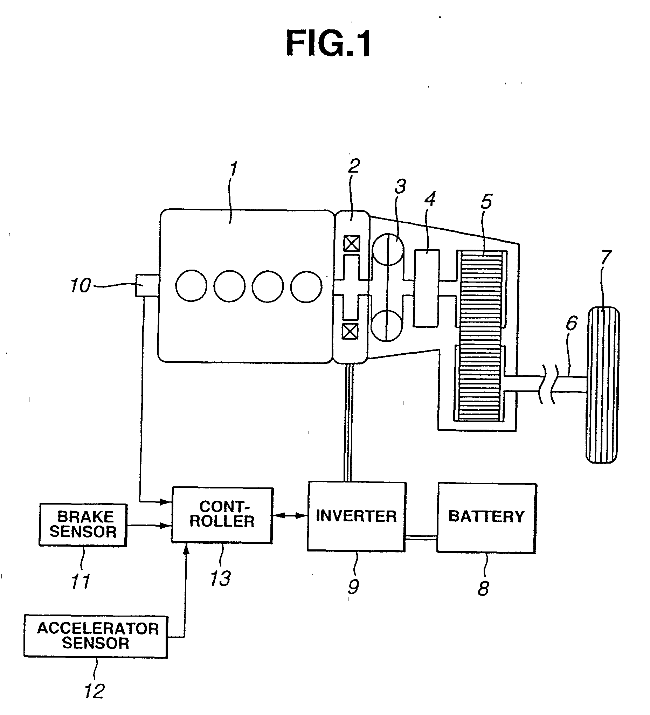

Referring now to the drawings, particularly to Fig. 1, the automotive vehicle with the automatic stop-restart system of the invention is exemplified in an internal combustion engine mated via an electric motor generator to a continuously variable automatic transmission, which uses a torque converter. As seen in Fig. 1, an electric motor generator 2 is disposed between the engine 1 and the continuously variable automatic transmission assembly. The motor generator 2 is mechanically coupled directly to the engine crankshaft of the engine 1 for rotation synchronously with the engine crankshaft. The continuously variable automatic transmission assembly is constructed by the torque converter 3, a forward-reverse switching clutch 4, and a belt-drive-type continuously variable transmission (often abbreviated to a "CVT") 5. An engine's output of the engine 1 is transmitted through the torque converter 3, the forward-reverse switching clutch 4, the belt-drive-type continuously variable transmission 5 via a drive shaft 6 to a road wheel 7. In the shown embodiment, although the motor generator 2 is mechanically connected directly to the engine crankshaft, in lieu thereof the motor generator 2 may be connected through a drive belt or a drive chain to the engine crankshaft. In place of the continuously variable automatic transmission, a typical automatic transmission system in which the speed ratio of driving to driven elements is variable in a stepwise manner over a required working range, may be used. Furthermore, instead of the use of the torque converter 4, the CVT 5 may use a magnetic start-up clutch for engine torque transmission (engine's output transmission) to axle shafts of driven wheels of the automotive vehicle during the engine restart period. Although it is not shown in Fig. 1, in order to inject a calculated amount of fuel based on an intake-air quantity and to electronically control a spark timing to match the ignition timing calculated on the basis of engine speed and engine load, an individual fuel injector and an individual spark plug are provided at each engine cylinder. In the shown embodiment, although a so-called "multi-port fuel injection (MPI) system" is used, as will be fully described later, the fundamental concept of the automotive vehicle with the automatic stop-restart system of the invention can be applied to a so-called direct-injection internal combustion engine in which fuel is injected directly into a combustion chamber. The motor generator 2 includes an alternating current motor/generator which functions as an electric motor and also as an electric generator. The motor generator 2 is able to operate at two modes, namely a power-running mode and a regenerative mode. During the power-running mode, the motor generator 2 is driven by electricity supplied via the inverter 9 to the motor generator to produce a motoring torque by which the engine is cranked or rotated. During the regenerative mode, the motor generator 2 is employed to regenerate electricity which is stored in the battery 8. A rotational speed of the engine 1 and the motor/generator 2 is detected on the basis of a period of time of a reference signal generated from a crank angle sensor 10. That is, the reference signal is used as an engine speed signal. A quantity of intake air drawn into an intake pipe of the induction system of the engine 1 is detected usually by means of an air flow meter (not shown). An engine temperature is detected by means of an engine coolant temperature sensor (not shown). A driver's braking action (or the presence or absence of a brake pedal) and a driver's accelerating action (or an amount of depression of an accelerator) are detected by means of a brake sensor 11 and an accelerator sensor 12. An input interface of a controller 13 receives input information, that is, engine/vehicle sensor signals from these sensors, so as to integrally control the engine 1, the motor generator 2, and the CVT 5. For instance, during vehicle deceleration (during braking) or during downhill driving, the motor generator 2 is operated in the regenerative mode, to provide a regenerative braking effect and regenerating electricity to the battery 8. During the vehicle start-up period from the standstill state, the motor generator 2 is operated in the power-running mode, to automatically crank and restart the engine by a motoring torque of the motor generator 2. During high load or during uphill driving, the motor generator 2 is operated in the power-running mode, at which the battery' s electricity is added via the inverter 9 to the motor generator 2 for increased torque output. Furthermore, the controller 13 executes an automatic engine-stop mode at which the engine 1 is automatically stopped by fuel cutoff when a predetermined automatic engine-stop condition is satisfied, during waiting period for a traffic signal or during traffic jam. For instance, the above predetermined automatic engine-stop condition is defined as a specified condition that the vehicle speed is less than a predetermined low value (that is, the vehicle is in the stopped state), the brake pedal is depressed, and the engine warm-up operation terminates. The controller 13 also generates a control command needed to initiate an automatic engine-restart operating mode when a predetermined automatic engine-restart condition is satisfied under the stopped state of the engine. The predetermined automatic engine-restart condition is defined as a specified condition that the brake pedal is released in the engine stopped state or a specified condition that an engine stop time (a time period counted from initiation of the fuel cutoff operation) exceeds a predetermined time period.

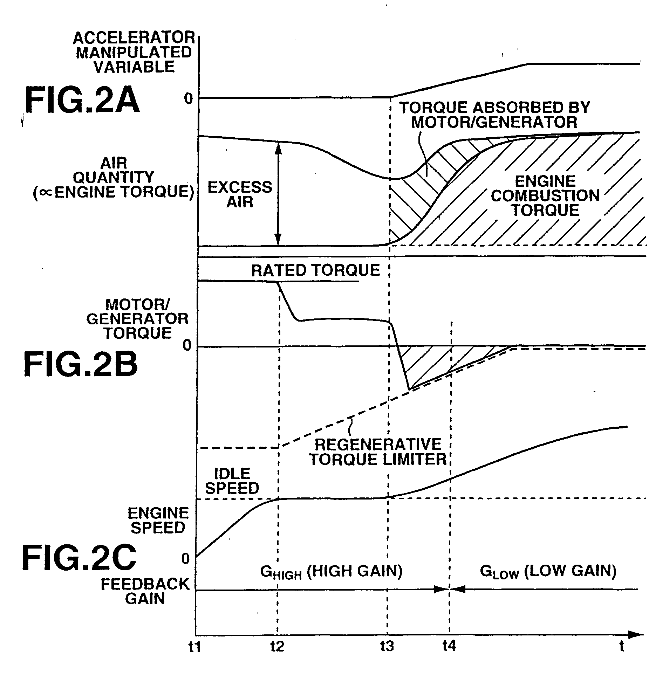

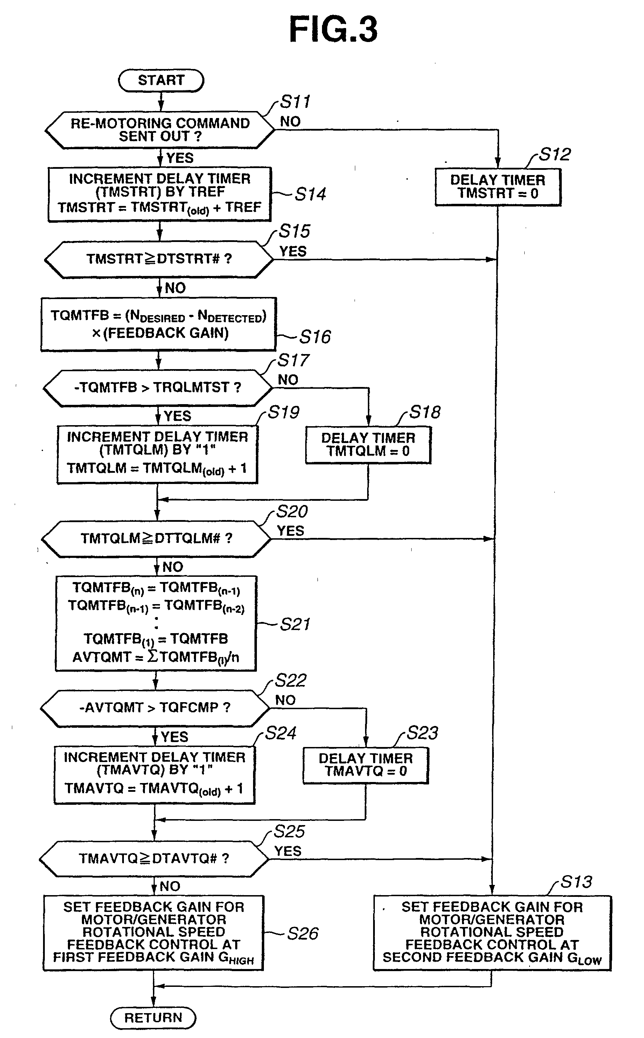

Referring now to Figs. 2A - 2C, there are shown the timing charts explaining the operation of the system of the embodiment during the automatic engine-restart operating mode. When the release of the brake pedal is detected by means of the brake sensor 11 under the stopped state of the engine 1, the controller 13 determines that the predetermined automatic engine-restart condition is satisfied, and thus the output interface of the controller generates a control command (necessary to initiate the automatic engine-restart operating mode) to the inverter 9. As a consequence, motor generator 2 is driven by electricity supplied from the battery 8 via the inverter 9 to the motor generator, so that a cranking cycle for the engine 1 is initiated by virtue of a motoring torque of the motor generator in its power-running mode. In this manner, at the beginning of the automatic engine-restart operating mode, that is, at the time t1, a torque control for the motor generator 2 is initiated by setting the motor torque of the motor generator 2 to a rated torque (a maximum torque). Thereafter, when the rotational speed of the motor generator 2, i.e., the engine speed of the engine 1 reaches a predetermined idle speed (see the time t2), the control mode of the motor generator 2 is shifted from the torque control mode to the rotational speed feedback control mode. When a predetermined time period has expired from the timing (the time t2) of shifting to the rotational speed feedback control, that is, at the time t3, a fuel-injection operation and spark plug firing are initiated to create a so-called combustion torque by burning of air-fuel mixture in the combustion chamber of the engine 1. At this time, if the negative pressure (boost) in the intake pipe does not yet develop, an internal pressure in the intake-pipe is almost equal to atmospheric, and thus excess air can be drawn into the engine cylinders. This produces a rapid rise in engine's output (or a rapid rise in engine combustion torque). Under such a condition, the controller 13 operates to rapidly switch the operating mode of the motor generator 2 from the power-running mode to the regenerative mode, so as to effectively absorb the undesired high initial combustion torque created by the engine. When the accelerator pedal is in its undepressed state, the engine speed is held down to the predetermined idle speed by way of the regenerative torque of the motor generator 2. On the other hand, when the accelerator pedal is depressed, the regenerative torque of the motor generator 2 is limited to a controllable specified torque level by means of a regenerative torque limiter, as indicated by the broken line of Fig. 2B. Therefore, only an engine torque corresponding to a quantity of excessive air or surplus air can be effectively absorbed, and thus the driver experiences a natural accelerating feel matching to the actual amount of depression of the accelerator pedal. As shown in Fig. 2B, the regenerative torque limiter is designed so that a limiting value of the limiter begins to decrease at a predetermined rate of change after shifting to the rotational speed feedback control (from the time t2), and then maintained at a predetermined low value, such as "0" or a predetermined value close to "0", after completion of the automatic engine-restart operating mode. As the combustion state of the engine 1 changes to a stable combustion state (see the time t4), the regenerative torque of the motor generator 2 decreases gradually, and approaches to "0" in the absence of demands for electric power generation. Thereafter, the rotational speed feedback control for the motor generator is continued, while the amount of engine torque to be absorbed by the motor generator 2, i.e., the amount of regenerative torque is limited to the predetermined low value such as approximately "0" by means of the regenerative torque limiter. Thus, after t4, when the accelerator pedal is depressed, the engine speed tends to exceed the predetermined idle speed and further to rise, thus ensuring an accelerating force matched to the amount of depression of the accelerator pedal. In Fig. 2B, a substantially tri-angular hatched zone indicates an overshoot engine torque area. According to the system of the embodiment, from the time t2 when the engine speed reaches the predetermined idle speed, the rotational speed feedback control for the motor generator 2 is initiated. After this, when the engine is starting up by initiation of the fuel-injection operation and spark plug firing, that is, just after the time t3, the operating mode of the motor generator 2 has to be quickly switched from the power-running mode to the regenerative mode, in order to effectively timely absorb the initial combustion torque of the engine 1. During the initial period of the combustion cycle of the engine, (see the time period from t3 to t4), the combustion stability is still low, and thereby positive and negative engine-speed fluctuations take place. In this case, the system requires a high response of the rotational speed feedback control. On the other hand, after shifting to the stable combustion state, i.e., after t4, in order to prevent the motor torque of the motor generator 2 from fluctuating remarkably due to small engine-speed fluctuations and to avoid recharging and discharging of the battery 8 from repeating for a brief moment, the system requires a low response of the rotational speed feedback control. To satisfy these two contradictory requirements, that is, a high response required during a transition from the power-running mode to the regenerative mode, and a low response required after shifting to the stable combustion of the engine, the system of the embodiment performs the feedback gain setting routine shown in Fig. 3. As described hereunder in reference to the flow chart of Fig. 3, the feedback gain for the rotational speed feedback control is determined or set depending on the degree of combustion stability of the engine 1.

Referring now to Fig. 3, the feedback gain setting routine is repeatedly executed as time-triggered interrupt routines to be triggered every predetermined time intervals. The time interval corresponds to a time period of the reference signal generated from the crank angle sensor 10. As regards the automatic engine-restart operating mode, its early stages corresponding to the time period from t1 to t3 in the timing charts of Figs. 2A - 2C, will be referred to as a "re-motoring period" during which the motor generator 2 is in the power-running mode and the engine 1 is automatically cranked by the motoring torque generated by the motor generator 2, whereas the time period after t3 will be hereinafter referred to as an "engine start-up period". Therefore, the previously-noted control command necessary to initiate the automatic engine-restart operating mode and thus to initiate a cranking cycle (a motoring operation of the motor generator) will be hereinafter referred to simply as a "re-motoring command".

At step S11, a check is made to determine whether the re-motoring command has been output. When the answer to step S11 is in the negative (NO), step S12 occurs. At step S12, a delay timer (TMSTRT) is initialized to "0". The delay timer (TMSTRT) is provided to count an elapsed time from the time when the re-motoring command has been sent out. Then, the routine proceeds from step S12 to step S13. At step S13, a second feedback gain GLOW (a comparatively low gain) is set as the feedback gain for the rotational speed feedback control. Then, the procedure returns to step S11. In contrast to the above, when the answer to step S11 is in the affirmative (YES), the routine proceeds to step S14. At step S14, the delay timer ( TMSTRT ) is incremented by the predetermined time period TREF of the reference signal (REF signal) from the crank angle sensor 10, by adding the predetermined time period TREF of the REF signal to the previous value $\text{TMSTRT}_{(old)}$ of the counted value of the delay timer (TMSTRT), as follows.

$$\text{TMSTRT} = \text{TMSTRT}_{(old)} + \text{TREF}$$

where TMSTRT denotes a current value $\text{TMSTRT}_{(new)}$ of the counted value of the delay timer (TMSTRT). In this manner, the elapsed time is counted from the time when the re-motoring command has been sent out, by way of the delay timer (TMSTRT).

Thereafter, at step S15, a check is made to determine whether the elapsed time counted by the timer (TMSTRT) is above a predetermined time period DTSTRT#. The predetermined time period DTSTRT# is determined depending upon an engine performance, a motor/generator performance, and a battery performance. In case that battery protection is considered as a matter of the highest priority, the predetermined time period DTSTRT# is set at a small value. For example, the predetermined time period DTSTRT# may be determined to vary in proportion to the product of the width of engine-speed fluctuations occurring during the idling period and a first feedback gain GHIGH (a comparatively high gain). The width of engine-speed fluctuations is determined depending on the engine performance. That is, the predetermined time period DTSTRT# is set to such a time period that the battery can be reliably continually recharged regardless of electric-current fluctuations, arising from torque fluctuations of the motor generator 2. When the counted value of the delay timer (TMSTRT) exceeds the predetermined time period DTSTRT# (TMSTRT $\geqq$ DTSTRT#) , the routine flows from step S15 to step S13, so as to set the feedback gain at the second feedback gain $G_{LOW}$. Conversely, when the counted value of the delay timer (TMSTRT) is less than the predetermined time period DTSTRT# (TMSTRT < DTSTRT#), the routine proceeds from step S15 to step S16. At step S16, a required motor-torque value TQMTFB (corresponding to a required regenerative torque value), needed during the motor-generator feedback control in order to effectively absorb and suppress the engine torque, is arithmetically calculated from the following expression.

$$\text{TQMTFB} = (N_{DESIRED} - N_{DETECTED}) \times (\text{FEEDBACK GAIN})$$

where $N_{DESIRED}$ denotes a desired engine speed, $N_{DETECTED}$ denotes a detected value of the engine speed, FEEDBACK GAIN denotes a feedback gain set through the routine of Fig. 3.

Then, at step S17, a check is made to determine whether an absolute value -TQMTFB (= |TQMTFB| ) of the required motor-torque value TQMTFB is above the limiting value TRQLMTST of the regenerative torque limiter. When the answer to step S17 is affirmative (YES), step S19 occurs. At step S19, a counted value of a delay timer (TMTQLM) is incremented by "1", as follows.

$$TMTQLM = TMTQLM_{(old)} + 1$$

where TMTQLM denotes the current value of the counted value of the delay timer, and $TMTQLM_{(old)}$ denotes the previous value of the counted value of the delay timer (TMTQLM), calculated one cycle before.

Conversely, when the answer to step S17 is negative (NO), step S18 occurs. At step S18, the counted value of the delay timer (TMTQLM) is initialized to "0". In other words, a series of steps S17 - S19 are provided to count the number of cycles during which the absolute value -TQMTFB (= |TQMTFB| ) of the required motor-torque value TQMTFB is continually maintained above the limiting value TRQLMTST of the regenerative torque limiter from the time when the absolute value -TQMTFB (= |TQMTFB|) exceeds the limiting value TRQLMTST. That is, the above number of cycles corresponds to the number of cycles, counted from the time when complete explosion occurs in the engine 1 and thus the engine begins to generate a combustion torque above the limiting torque value TRQLMTST of the regenerative torque limiter. Thereafter, at step S20, a test is made to determine whether the counted value of the timer (TMTQLM) is above a predetermined value DTTQLM#. The predetermined value DTTQLM# is determined by the following expression.

$$DTTQLM\# = (\text{the number of engine cylinders}) \times 2$$

The above expression means that the combustion state of the engine 1 has shifted to a stable combustion state when each of all engine cylinders of the engine 1 generates an engine's output torque (combustion torque) above the predetermined torque value continuously for at least two cycles.

When the answer to step S20 is affirmative, that is, TMTQLM $\geqq$ DTTQLM#, the routine proceeds to step S13, to set the feedback gain to the second feedback gain GLOW Conversely, when the answer to step S20 is negative, that is, TMTQLM < DTTQLM#, the routine proceeds to step S21. An average value AVTQMT of n cycles of the required motor-torque value data TQMTFB(i) for the motor generator 2 is arithmetically calculated, as follows.

$$AVTQMT \ (= \Sigma TQMTFB(i)/n)$$

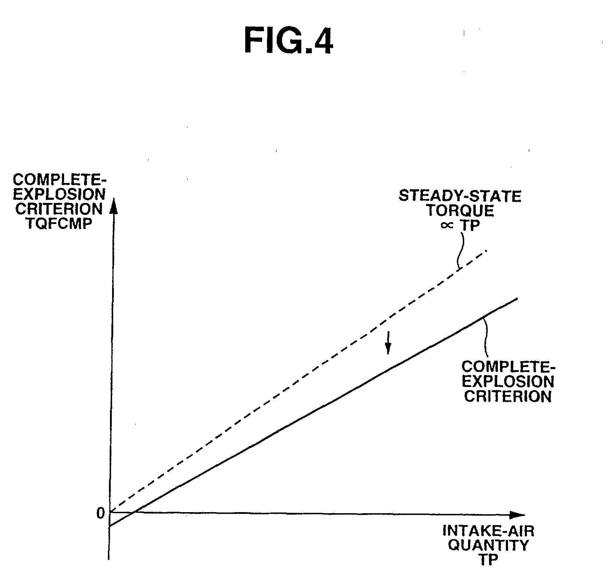

Thereafter, at step S22, a check is made to determine whether the absolute value -AVTQMT (= |AVTQMT|) of the required motor-torque average value AVTQMT is above a complete-explosion criterion TQFCMP. The complete-explosion criterion TQFCMP is calculated by multiplying a steady-state torque with a predetermined coefficient, such as 0.8, accounting for individual differences of motor generators used. Actually, the complete-explosion criterion TQFCMP is arithmetically calculated or retrieved from a predetermined lookup table of Fig. 4, showing how the complete-explosion criterion TQFCMP has to be varied relative to an intake-air-quantity TP (regarded as engine load). When the answer to step S22 is affirmative, step S24, a counted value of a delay timer (TMAVTQ) is incremented by "1", as follows.

$$TMAVTQ = TMAVTQ_{(old)} + 1$$

where TMAVTQ denotes the current value of the counted value of the delay timer, and $TMAVTQ_{(old)}$ denotes the previous value of the counted value of the delay timer (TMAVTQ), calculated one cycle before.

Conversely, when the answer to step S22 is negative, step S23 occurs. At step S23, the counted value of the delay timer (TMAVTQ) is initialized to "0". A series of steps S22 - S24 are provided to count the number of cycles during which the absolute value -AVTQMT (= (AVTQMT) of the required motor-torque average value AVTQMT is continually kept above the complete-explosion criterion TQFCMP from the time when the absolute value -AVTQMT (= |AVTQMT|) exceeds the complete-explosion criterion TQFCMP. Then, at step S25, a test is made to determine whether the counted value of the timer (TMAVTQ) is above a predetermined value DTAVTQ#. The predetermined value DTAVTQ# is determined by the following expression.

DTAVTQ# (the number of engine cylinders) $\times$ 2

The above expression means that the combustion state of the engine 1 has shifted to a stable combustion state when a condition of the absolute motor-torque average value -AVTQMT (= |AVTQMT| ) above the predetermined value continues for at least two cycles.

When the answer to step S25 is affirmative, that is, TMAVTQ $\geqq$ DTAVTQ#, the controller determines that the combustion state of the engine 1 has shifted to the stable combustion state. Thus, the routine flows from step S25 to step S13, to set the feedback gain to the second feedback gain $G_{LOW}$. Conversely, when the answer to step S25 is negative, that is, TMAVTQ < DTAVTQ#, the controller determines that the engine 1 is in an unstable combustion state. Thus, the routine proceeds to step S26. At step S26, the feedback gain is set at the first feedback gain GHIGH (>$G_{Low}$ ) .

As discussed above, according to the feedback gain setting routine shown in Fig. 3, at early stages (t1 - t4) of the rotational speed feedback control, the feedback gain is set at the comparatively-high feedback gain, that is, the first feedback gain $G_{HIGH}$. When such a condition that the regenerative torque required for the motor generator 2 or its average value is above a predetermined value, continues for the predetermined number of cycles, or when a predetermined elapsed time, counted from the time when the re-motoring command has been sent out, reaches a predetermined time period, the feedback gain is switched from the comparatively high feedback gain ($G_{HIGH}$) to the comparatively low feedback gain ($G_{LOW}$). The operation of the system of the embodiment is hereinafter described in detail in reference to the timing chart of Figs. 2A - 2C. As shown in Figs. 2A - 2C, the regenerative toque required for the motor generator 2 becomes above the limiting torque value of the torque limiter (TRQLMTST) at the time t3. Just after t3, the regenerative torque is continually limited to the limiting value of the regenerative torque limiter (TRQLMTST). Such a limited condition of the regenerative torque remaining limited to the limiting value of the torque limiter is continued for a while. At the time t4 when the limited condition continues for a predetermined number of cycles, the controller determines that the combustion state of the engine 1 has shifted to the stable combustion state. At this time (t4), the feedback gain is switched from the first feedback gain ($G_{HIGH}$) to the second feedback gain (GLOW) .

In case of the flow charts shown in Figs. 2A - 2C, the transition from the unstable combustion state to the stable combustion state (that is, a timing of switching from high to low feedback gain) is initiated on the basis of a specified limited condition that the regenerative torque remains limited to the limiting value of the torque limiter for a predetermined number of cycles or a predetermined time period (see the flow from step S20 to step S13). In lieu thereof, the timing of switching from high to low feedback gain can be detected by a specified condition that the absolute value |AVTQMT| of the required motor-torque average value |AVTQMT| (corresponding to an average value of the regenerative torque required for the motor generator 2) is maintained above the predetermined value for the predetermined number of cycles (see the flow from step S25 to step S13). The use of the required motor-torque average value AVTQMT (corresponding to an average value of the regenerative torque required for the motor generator 2) contributes to a more precise decision for a transition from an unstable combustion state to a stable combustion state on internal combustion engines having relatively great combustion differences between engine cylinders, and thus having an'increased tendency that the previously-noted specified limited condition cannot be always continued even when the engine is in the stable combustion state. Furthermore, according to the routine shown in Fig. 3, even when the previously-noted specified limited condition of the regenerative torque is unsatisfied or even when the specified condition that the absolute value of the required motor-torque average value AVTQMT (corresponding to an average value of the regenerative torque required for the motor generator 2) is maintained above the predetermined value for the predetermined number of cycles is unsatisfied, the switching operation from high ($G_{HIGH}$) to low (GLOW) feedback gain can be initiated under a specified condition where a predetermined time period, counted from the time when the re-motoring command has been sent out, has expired (see the flow from step S15 to step S13 in Fig. 3). According to the system of the embodiment, it is possible to prevent a high-response feedback control with the high feedback gain ($G_{HIGH}$) from continuing for a long period of time than need be. As discussed previously, in case of the use of the high feedback gain ($G_{HIGH}$), a charging and discharging burden of the battery 8 is heavy, because of repetition of recharging and discharging for a brief moment. By timely switching between high ($G_{HIGH}$) and low ($G_{LOW}$) feedback gains depending on the elapsed time (TMSTRT) counted from the time when the re-motoring command has been sent out, regardless of the combustion stability of the engine 1, the system of the embodiment can avoid the problem of undesirable repetition of recharging and discharging of the battery for a brief moment, thus increasing a battery life.

As will be appreciated from the above, the system of the embodiment can properly switch the feedback gain for the rotational speed feedback control for the motor generator 2 between a predetermined high feedback gain ($G_{HIGH}$) and a predetermined low feedback gain ($G_{LOW}$), depending upon information regarding which combustion state the engine 1 is in, and the elapsed time counted from a timing when the re-motoring command has been sent out. Therefore, the system of the embodiment can reconcile a feedback-control response (a high response) required during the first few moments (t1 - t4) after initiation of the automatic engine-restart operating mode and a feedback-control response (a low response) required after a transition to the stable combustion state of the engine (after t4), during the motor-generator rotational speed feedback control when the engine is automatically restarted.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

**Claims**

1. An automotive vehicle with an automatic stop-restart system of an internal combustion engine, comprising:

   a sensor sensing a rotational speed of the engine;
   a motor generator coupled to an engine for rotation synchronously with the engine, and cranking the engine in response to a command needed to initiate a cranking cycle by a motoring operation of the motor generator, and subjected to a rotational speed feedback control after the rotational speed of the engine reaches a predetermined speed, and capable of operating in a power-running mode to automatically restart the engine by the motoring torque and operating in a regenerative mode for energy regeneration; and
   a controller capable of executing an automatic engine-stop mode at which the engine is automatically stopped by fuel cutoff, and generating the command for an automatic engine-restart operating mode at which the engine is cranked by the motoring operation and then started up by initiating timely a-fuel-injection operation after initiation of the rotational speed feedback control, said controller comprising:

   a combustion-stability decision section which determines whether the engine is in a stable combustion state; and
   being **characterized by**: feedback gain switching section which switches a feedback gain for the rotational speed feedback control between at least two feedback gains, depending upon a combustion state of the engine determined by said combustion-stability decision section.

2. The automotive vehicle with the automatic stop-restart system as claimed in claim 1, wherein said feedback gain switching section set a first feedback gain as the feedback gain for the rotational speed feedback control until the engine comes into the stable combustion state, and switches to a second feedback gain less than the first feedback gain after shifting to the stable combustion state.

3. The automotive vehicle with the automatic stop-restart system as claimed in claims 1 or 2, wherein said combustion-stability decision section determines that the engine comes into the stable combustion state when a regenerative toque required for the motor generator is kept above a first predetermined value continually for a predetermined number of cycles.

4. The automotive vehicle with the automatic stop-restart system as claimed in claim 3, wherein the first predetermined value is a variable which decreases at a predetermined rate of change after initiation of the rotational speed feedback control and is maintained at a predetermined low value after completion of the automatic engine-restart operating mode.

5. The automotive vehicle with the automatic stop-restart system as claimed in any one of preceding claims, wherein said combustion-stability decision section determines that the engine comes into the stable combustion state when an average value of a regenerative toque required for the motor generator is kept above a second predetermined value continually for a predetermined number of cycles.

6. The automotive vehicle with the automatic stop-restart system as claimed in claim 5, wherein the second predetermined value varies depending upon a quantity of intake air drawn into the engine.

7. The automotive vehicle with the automatic stop-restart system as claimed in any one of preceding claims, wherein said feedback gain switching section switches the feedback gain for the rotational speed feedback control between the at least two feedback gains, when an elapsed time counted from a time when the command has been sent out reaches a predetermined time period.

**EP 1 052 401 B1**

**Patentansprüche**

1. Kraftfahrzeug mit einem automatischen Stop-/Wiederstart-System eines Verbrennungsmotors, umfassend:

   einen Sensor zum Erfassen einer Drehgeschwindigkeit des Verbrennungsmotors;
   einen Motorgenerator, der mit einem Verbrennungsmotor verbunden ist zur synchronen Drehung mit dem Verbrennungsmotor, und zum Anlassen des Verbrennungsmotors entsprechend einem Befehl, der zum Einleiten eines Startzyklus durch eine Antriebsfunktion des Motorgenerators erforderlich ist, und der einer Drehgeschwindigkeits-Rückmeldesteuerung unterworfen wird, nachdem die Drehgeschwindigkeit des Verbrennungsmotors eine vorbestimmte Drehzahl erreicht, und der in der Lage ist, in einem Kraftantriebsmodus, um den Verbrennungsmotor automatisch durch das Antriebsdrehmoment wieder zu starten, und in einem regenerativen Modus zur Energiewiederherstellung zu funktionieren; und
   eine Steuerung, die einen automatischen Motorstopmodus ausführen kann, bei dem der Verbrennungsmotor automatisch mittels Unterbrechung der Kraftstoffzufuhr gestoppt wird, und die den Befehl für einen automatischen Motorwiederstart-Betriebsmodus erzeugen kann, in dem der Verbrennungsmotor durch die Betriebsfunktion angelassen und dann durch rechtzeitige Einleitung einer Kraftstoff-Einspritzfunktion nach Einleitung der Drehgeschwindigkeits-Rückmeldesteuerung gestartet wird, wobei die Steuerung:

   einen Verbrennungsstabilitäts-Entscheidungsabschnitt umfasst, welcher bestimmt, ob der Verbrennungsmotor sich in einem stabilen Verbrennungszustand befindet; und wobei die Steuerung **gekennzeichnet ist durch**:

   einen Rückmeldungsverstärkungs-Schaltabschnitt, der einen Rückmeldungsverstärkungswert für die Drehgeschwindigkeits-Rückmeldesteuerung zwischen zumindest zwei Rückmeldungsverstärkungwerten schaltet, abhängig von einem Verbrennungszustand des Verbrennungsmotors, bestimmt **durch** den Verbrennungsstabilitäts-Entscheidungsabschnitt.

2. Kraftfahrzeug mit dem automatischen Stop-/Wiederstartsystem nach Anspruch 1, wobei der Rückmeldungsverstärkungs-Schaltabschnitt einen ersten Rückmeldungsverstärkungswert als den Rückmeldungsverstärkungswert für die Drehgeschwindigkeits-Rückmeldesteuerung festlegt, bis der Verbrennungsmotor in den stabilen Verbrennungszustand kommt, und zu einem zweiten Rückmeldungsverstärkungswert umschaltet, der nach Umschalten in den stabilen Verbrennungszustand geringer als der erste Rückmeldungsverstärkungswert ist.

3. Kraftfahrzeug mit dem automatischen Stop-/Wiederstartsystem nach Anspruch 1 oder 2, wobei der Verbrennungsstabilitäts-Entscheidungsabschnitt bestimmt, dass der Verbrennungsmotor in den stabilen Verbrennungszustand kommt, wenn ein für den Motorgenerator erforderlicher regenerativer Drehmoment oberhalb eines ersten vorbestimmten Werts andauernd für eine vorbestimmte Anzahl von Zyklen gehalten wird.

4. Kraftfahrzeug mit dem automatischen Stop-/Wiederstartsystem nach Anspruch 3, wobei der erste vorbestimmte Wert eine Variable ist, die mit einer vorbestimmten Änderungsrate nach Einleitung der Drehgeschwindigkeits-Rückmeldesteuerung abnimmt und auf einem vorbestimmten niederen Wert gehalten wird nach Beendigung des automatischen Motorwiederstart-Betriebsmodus.

5. Kraftfahrzeug mit dem automatischen Stop-/Wiederstartsystem nach einem der vorhergehenden Ansprüche, wobei der Verbrennungsstabilitäts-Entscheidungsabschnitt bestimmt, dass der Verbrennungsmotor in den stabilen Verbrennungszustand kommt, wenn ein Durchschnittswert eines regenerativen Drehmoments für den Motorgenerator über einem zweiten vorbestimmten Wert andauernd für eine vorbestimmte Anzahl von Zyklen gehalten wird.

6. Kraftfahrzeug mit dem automatischen Stop-/Wiederstartsystem nach Anspruch 5, wobei der zweite vorbestimmte Wert sich ändert abhängig von einer Menge von Ansaugluft, die in den Verbrennungsmotor angesaugt wird.

7. Kraftfahrzeug mit dem automatischen Stop-/Wiederstartsystem nach einem der vorhergehenden Ansprüche, wobei der Rückmeldungsverstärkungs-Schaltabschnitt den Rückmeldungsverstärkungswert für die Drehgeschwindigkeits-Rückmeldesteuerung zwischen den zumindest zwei Rückmeldungsverstärkungswerten schaltet, wenn eine verstrichene Zeit, gezählt von einem Zeitpunkt, wenn der Befehl ausgegeben wurde, einen vorbestimmten Zeitabschnitt erreicht.

**Revendications**

1. Véhicule automobile équipé d'un système automatique d'arrêt et de redémarrage d'un moteur à combustion interne, comprenant :

   un capteur détectant une vitesse de rotation du moteur ;
   un moteur-générateur couplé à un moteur pour tourner de façon synchrone avec le moteur, et lançant le moteur en réponse à une commande requise pour amorcer un cycle de lancement par un entraînement du moteur-générateur, et soumis à un contrôle à rétroaction de la vitesse de rotation une fois que la vitesse de rotation du moteur atteint une vitesse prédéterminée, et susceptible de fonctionner dans un mode d'alimentation en puissance pour redémarrer automatiquement le moteur grâce au couple d'entraînement et de fonctionner dans un mode régénératif afin de régénérer l'énergie ; et
   un organe de commande susceptible de mettre en oeuvre un mode automatique d'arrêt du moteur dans lequel le moteur est arrêté automatiquement en coupant l'alimentation en carburant, et de générer la commande du mode de redémarrage automatique du moteur, dans lequel le moteur est lancé par l'entraînement du moteur-générateur, puis démarré en amorçant de façon opportune une injection de carburant après l'amorçage du contrôle à rétroaction de la vitesse de rotation, cet organe de commande comprenant :

   une section de décision sur la stabilité de combustion, qui détermine si le moteur se trouve dans un état de stabilité de combustion ; **caractérisé par**
   une section de commutation de gain de rétroaction qui commute un gain de rétroaction pour la commande à rétroaction de la vitesse de rotation, choisi entre au moins deux valeurs de gain de rétroaction, en fonction d'un état de combustion du moteur qui est déterminé par la section de décision sur la stabilité de combustion.

2. Véhicule automobile équipé du système automatique d'arrêt et de redémarrage selon la revendication 1, dans lequel la section de commutation de gain de rétroaction fixe un premier gain de rétroaction, qui sert de gain de rétroaction pour le contrôle à rétroaction de la vitesse de rotation, jusqu'à ce que le moteur atteigne l'état de stabilité de combustion, et commute dans un deuxième gain de rétroaction qui est inférieur au premier gain de rétroaction après commutation dans l'état de stabilité de combustion.

3. Véhicule automobile équipé du système automatique d'arrêt et de redémarrage selon la revendication 1 ou 2, dans lequel la section de décision sur la stabilité de combustion détermine que le moteur arrive à l'état de stabilité de combustion lorsqu'un couple régénératif requis pour le moteur-générateur est maintenu continuellement au-dessus d'une première valeur prédéterminée, pendant un nombre prédéterminé de cycles.

4. Véhicule automobile équipé du système automatique d'arrêt et de redémarrage selon la revendication 3, dans lequel la première valeur prédéterminée est une variable qui diminue à un taux de modification prédéterminé après l'amorce du contrôle par rétroaction de la vitesse de rotation, et est maintenue à une valeur faible prédéterminée après l'arrêt du mode automatique d'arrêt et de redémarrage du moteur.

5. Véhicule automobile équipé du système automatique d'arrêt et de redémarrage selon l'une quelconque des revendications précédentes, dans lequel la section de décision sur la stabilité de combustion détermine que le moteur parvient dans l'état de stabilité de combustion lorsqu'une valeur moyenne d'un couple régénératif requise pour le moteur-générateur est maintenue continuellement au-dessus d'une deuxième valeur prédéterminée pendant un nombre prédéterminé de cycles.

6. Véhicule automobile équipé du système automatique d'arrêt et de redémarrage selon la revendication 5, dans lequel la deuxième valeur prédéterminée varie en fonction d'une quantité d'air d'admission aspiré dans le moteur.

7. Véhicule automobile équipé du système automatique d'arrêt et de redémarrage selon l'une quelconque des revendications précédentes, dans lequel la section de commutation de gain de rétroaction commute dans le gain de rétroaction qui sert pour le contrôle à rétroaction de la vitesse de rotation, en choisissant entre les gains de rétroaction, qui sont au nombre minimum de deux, lorsqu'un temps écoulé, décompté à partir d'un moment où la commande a été envoyée, atteint une durée prédéterminée.

# FIG.1

BRAKE SENSOR

CONT-ROLLER

INVERTER

BATTERY

ACCELERATOR SENSOR

EP 1 052 401 B1

FIG.2A

ACCELERATOR MANIPULATED VARIABLE

AIR QUANTITY (∝ ENGINE TORQUE)

EXCESS AIR

TORQUE ABSORBED BY MOTOR/GENERATOR

ENGINE COMBUSTION TORQUE

FIG.2B

MOTOR/ GENERATOR TORQUE

RATED TORQUE

REGENERATIVE TORQUE LIMITER

IDLE SPEED

FIG.2C

ENGINE SPEED

FEEDBACK GAIN

G_HIGH (HIGH GAIN)

G_LOW (LOW GAIN)

t1  t2  t3  t4  t

12

# FIG.3

```
                    ( START )
                        │
                        ▼
              ┌──────────────────────┐    S11
         ┌────< RE-MOTORING COMMAND  >────────────────────────────┐ NO
         │    \   SENT OUT ?         /                            │
         │     └──────────────────────┘                           │
         │          │ YES                                         │
         │          ▼                                             ▼
         │  ┌──────────────────────────┐              ┌──────────────────────┐ S12
         │  │ INCREMENT DELAY TIMER    │              │   DELAY TIMER        │
         │  │      (TMSTRT) BY TREF    │ S14          │   TMSTRT = 0         │
         │  │ TMSTRT = TMSTRT(old) + TREF│            └──────────────────────┘
         │  └──────────────────────────┘                          │
         │          │                     S15                     │
         │     ┌──────────────────────┐    YES                    │
         │     < TMSTRT ≧ DTSTRT# ?   >───────────────────────────┤
         │      └──────────────────────┘                          │
         │          │ NO                                          │
         │          ▼                                             │
         │  ┌──────────────────────────┐                          │
         │  │ TQMTFB = (NDESIRED - NDETECTED) │                   │
         │  │      × (FEEDBACK GAIN)   │ S16                       │
         │  └──────────────────────────┘                          │
         │          │              S17                            │
         │     ┌──────────────────────┐    NO                     │
         │     < -TQMTFB > TRQLMTST ? >──────┐                     │
         │      └──────────────────────┘     │                    │
         │          │ YES          S19       ▼   S18              │
         │  ┌──────────────────────────┐  ┌──────────────────┐    │
         │  │ INCREMENT DELAY TIMER    │  │  DELAY TIMER     │    │
         │  │      (TMTQLM) BY "1"     │  │  TMTQLM = 0      │    │
         │  │ TMTQLM = TMTQLM(old) + 1 │  └──────────────────┘    │
         │  └──────────────────────────┘         │               │
         │          │◄─────────────────────────────┘             │
         │          │                S20                          │
         │     ┌──────────────────────┐    YES                    │
         │     < TMTQLM ≧ DTTQLM# ?   >───────────────────────────┤
         │      └──────────────────────┘                          │
         │          │ NO                                          │
         │          ▼                                             │
         │  ┌──────────────────────────┐                          │
         │  │ TQMTFB(n) = TQMTFB(n-1)  │                          │
         │  │ TQMTFB(n-1) = TQMTFB(n-2)│                          │
         │  │          ·               │ S21                      │
         │  │ TQMTFB(1) = TQMTFB       │                          │
         │  │ AVTQMT = Σ TQMTFB(i)/n   │                          │
         │  └──────────────────────────┘                          │
         │          │                S22                          │
         │     ┌──────────────────────┐    NO                     │
         │     < -AVTQMT > TQFCMP ?   >──────┐                     │
         │      └──────────────────────┘     │                    │
         │          │ YES          S24       ▼   S23              │
         │  ┌──────────────────────────┐  ┌──────────────────┐    │
         │  │ INCREMENT DELAY TIMER    │  │  DELAY TIMER     │    │
         │  │      (TMAVTQ) BY "1"     │  │  TMAVTQ = 0      │    │
         │  │ TMAVTQ = TMAVTQ(old) + 1 │  └──────────────────┘    │
         │  └──────────────────────────┘         │               │
         │          │◄─────────────────────────────┘             │
         │          │                S25                          │
         │     ┌──────────────────────┐    YES                    │
         │     < TMAVTQ ≧ DTAVTQ# ?   >───────────────────────────┤
         │      └──────────────────────┘                          │
         │          │ NO                                          │
         │          ▼                                             ▼
         │  ┌──────────────────────────┐         ┌──────────────────────────┐ S13
         │  │ SET FEEDBACK GAIN FOR    │         │  SET FEEDBACK GAIN FOR   │
         │  │    MOTOR/GENERATOR       │         │     MOTOR/GENERATOR      │
         │  │   ROTATIONAL SPEED       │ S26     │    ROTATIONAL SPEED      │
         │  │   FEEDBACK CONTROL AT    │         │    FEEDBACK CONTROL AT   │
         │  │ FIRST FEEDBACK GAIN GHIGH│         │ SECOND FEEDBACK GAIN GLOW│
         │  └──────────────────────────┘         └──────────────────────────┘
         │          │                                    │
         │          └──────────────┬─────────────────────┘
         │                         ▼
         │                   ( RETURN )
```

Flowchart steps:

- **S11**: RE-MOTORING COMMAND SENT OUT ?
- **S12**: DELAY TIMER TMSTRT = 0
- **S14**: INCREMENT DELAY TIMER (TMSTRT) BY TREF; $TMSTRT = TMSTRT_{(old)} + TREF$
- **S15**: $TMSTRT \geqq DTSTRT\# ?$
- **S16**: $TQMTFB = (N_{DESIRED} - N_{DETECTED}) \times (\text{FEEDBACK GAIN})$
- **S17**: $-TQMTFB > TRQLMTST ?$
- **S18**: DELAY TIMER TMTQLM = 0
- **S19**: INCREMENT DELAY TIMER (TMTQLM) BY "1"; $TMTQLM = TMTQLM_{(old)} + 1$
- **S20**: $TMTQLM \geqq DTTQLM\# ?$
- **S21**: $TQMTFB_{(n)} = TQMTFB_{(n-1)}$; $TQMTFB_{(n-1)} = TQMTFB_{(n-2)}$; $\cdots$; $TQMTFB_{(1)} = TQMTFB$; $AVTQMT = \Sigma TQMTFB_{(i)}/n$
- **S22**: $-AVTQMT > TQFCMP ?$
- **S23**: DELAY TIMER TMAVTQ = 0
- **S24**: INCREMENT DELAY TIMER (TMAVTQ) BY "1"; $TMAVTQ = TMAVTQ_{(old)} + 1$
- **S25**: $TMAVTQ \geqq DTAVTQ\# ?$
- **S26**: SET FEEDBACK GAIN FOR MOTOR/GENERATOR ROTATIONAL SPEED FEEDBACK CONTROL AT FIRST FEEDBACK GAIN $G_{HIGH}$
- **S13**: SET FEEDBACK GAIN FOR MOTOR/GENERATOR ROTATIONAL SPEED FEEDBACK CONTROL AT SECOND FEEDBACK GAIN $G_{LOW}$

# FIG.4

COMPLETE-
EXPLOSION
CRITERION
TQFCMP

STEADY-STATE
TORQUE
∝ TP

COMPLETE-
EXPLOSION
CRITERION

0

INTAKE-AIR
QUANTITY
TP